# EUROPEAN PATENT APPLICATION

(11) **EP 2 343 650 A2**
(43) Date of publication of application: **13.07.2011**
(21) Application number: 11150501.2
(22) Date of filing: 10.01.2011
(51) Int. Cl.: G06F 11/00

(54) **Hardware based connection state machine with built in timers**

(30) Priority: 08.01.2010 US 684260
(71) Applicant: Rockwell Automation Technologies, Inc., Mayfield Heights, OH 44124 (US)
(72) Inventor: Hall, Kenwood H., Hudson, OH 44236 (US); Schultz, Ronald E., Solon, OH 44139 (US); Kubiak, Ryan M., Chesterland, OH 44026 (US)
(74) Representative: Grünecker, Kinkeldey, Stockmair & Schwanhäusser Anwaltssozietät

(57) **Abstract**

The present invention provides a hardware implemented connection monitoring system 40 for an industrial controller. The connection monitoring system 40 includes a state machine 42 executing independently of a processor 30 to monitor the status of input/output devices connected to the controller. A timer array is established in a portion memory 44 accessible by the state machine 42. An event buffer 46 and a command buffer 48 are used to communicate between the processor 30 and the state machine 42.

## Description

### BACKGROUND OF THE INVENTION

The subject matter disclosed herein relates generally to industrial controllers for controlling industrial processes or machinery. More specifically, a hardware based system for managing timers associated with connections to the industrial controller is disclosed.

Industrial controllers are special purpose computers used for controlling factory automation and the like. The control program executed by the industrial controller is normally highly customized to a particular control application. Special control languages, such as "relay ladder logic" are normally used to facilitate programming of the device. The stored control programs may be continuously executed in a series of execution cycles, repeated periodically, or executed based on events. Due to the potentially high costs associated with downtime of an industrial process such as an assembly line, the industrial controller must ensure predictable high-speed execution of the instructions for reliable real-time control.

Under the direction of the stored program, the industrial controller periodically examines a series of inputs reflecting the status of the controlled process and changes outputs affecting the control of the process. The inputs and outputs may be binary (i.e., "on" or "off") or, alternatively, analog inputs and outputs taking on a continuous range of values may also be used. The binary inputs and outputs may be represented by single bits of data; the analog inputs and outputs may be represented by multiple bit data words.

In order to ensure predictable control of the process, the communication between the controller and the inputs and outputs must be highly reliable and performed at well-defined periods. The controller must also verify that the input and output (I/O) devices connected to the controller continue operating properly. Typically, the controller includes a task which periodically monitors operation of the I/O devices. The monitoring task may, for example, check that the I/O devices have recently communicated with the controller. If an I/O device stops communicating with the controller, the controller may optionally try to restore communications with the I/O device or set a fault message indicating that the I/O device has ceased operating.

However, as industrial processes grow in complexity, an increasing number of devices are being connected to the industrial controller. The increasing number of devices causes the monitoring task to execute for an increasing amount of time, resulting in a reduction of processing time available to the control program. If too many devices are connected to the industrial controller, the controller may no longer be able to ensure predictable high-speed execution of the control program. Presently, an industrial controller can monitor up to about two hundred fifty I/O devices before the task of monitoring I/O devices demands too much processing time and bandwidth.

Consequently, it would be desirable to provide a monitoring system that executes independently of the processor to verify that the I/O devices connected to the industrial controller continue proper operation. It would also be desirable to significantly increase the number of I/O devices that can be monitored to accommodate the increasing number of connections required by more complex industrial processes.

### BRIEF DESCRIPTION OF THE INVENTION

The present invention provides a hardware implemented connection monitoring system. A timer array establishes an input and an output connection timer for each connection between the processor and an I/O device where an I/O device may be any device capable of providing input or output signals to the processor. A state machine periodically steps through the timer array to update the accumulated values of the timers and to monitor if any of the timers has reached a preset, timer done value. If a connection timer reaches the timer done value, the state machine loads the state of the connection timer into an event buffer and generates an interrupt for the processor. The processor reads the event buffer, identifies whether the expired timer was an input timer or an output timer, and takes action accordingly.

In one embodiment of the invention, a connection monitoring system for an industrial controller includes a processor executing a program to periodically communicate with multiple Input/Output (I/O) devices connected to the processor. A hardware timer array includes at least one connection timer associated with each of the of I/O devices. A state machine executes separately from the processor to monitor each connection timer to provide a signal to the processor in response to a change in state of the timer.

Thus, it is a feature of the invention that a system executing independently of the processor increases the processing time available on the processor and monitors the connections between the I/O devices and the processor.

As another aspect of the invention, the timer array may allocate both an input and an output timer for each of the I/O devices connected to the processor. Thus, it is another feature of the invention that the timer array supports bidirectional communication for any I/O device.

As yet another aspect of the invention, the connection monitoring system includes a dedicated interface between the hardware timer array and the state machine. The dedicated interface provides quick access to the timer array by the state machine and reduces the bandwidth requirements for accessing memory in the controller.

As another aspect of the invention, the connection monitoring system includes a command buffer for transmitting messages between the processor and the state machine and an event buffer for transmitting the signals between the state machine and the processor upon the change in state of the connection timer. The connection monitoring system may also include at least one additional event buffer and the state machine may selectively load the signal from each timer into one of the event buffers. Multiple event buffers may, for example, permit the state machine to separate state change events, such as input or output time-out events, prior to transmitting the state of the timers to the processor, or, alternately, the event buffers may be processed by separate processors or by separate processing cores executing on a single processor.

The connection monitoring system may also include at least one additional state machine wherein each of the state machines monitors a portion of the timer array. Multiple state machines optionally permit the timers to be scanned more frequently or permit a reduction in the clock speed.

In another embodiment of the invention, a connection monitoring system for an industrial controller includes a first and a second processor. At least one of the processors executes a program to periodically communicate with at least one of a plurality of Input/Output (I/O) devices. A hardware timer array includes at least one timer associated with each of the plurality of I/O devices. A first state machine executes separately from each of the processors to monitor each timer to provide a signal to at least one of the processors upon expiration of the timer. The connection monitoring system also includes a dedicated communication channel between the hardware timer array and the first state machine. A command buffer transmits messages between at least one of the processors and the first state machine, and a first event buffer transmits the signals between the first state machine and the at least one processor upon expiration of the timer.

As another aspect of the invention, the connection monitoring system may include at least one additional state machine, and each of the state machines monitors the state of a portion of the timer array. The connection monitoring system may also include a second event buffer. The state of each timer may be selectively loaded into one of the event buffers. The processors may interface with the state machine in different configurations. For example, the first processor may read from the first event buffer and the second processor may read from the second event buffer. Optionally, the first processor may interface with the command buffer and the second processor may interface with the event buffer.

Thus, it is another feature of this invention that the state machine may interface with a multi-processor controller. The system may be flexibly configured such that each processor interfaces to either the command or the event buffer of the state machine, or, optionally, the state machine may include multiple command or event buffers such that each processor performs a portion of the interface with each buffer.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:

FIG. 1 is a block diagram of an industrial controller incorporating a hardware based connection state machine according to the present invention;

FIG. 2 is a block diagram of a processor module of FIG. 1 illustrating one embodiment of a hardware based connection state machine according to the present invention;

FIG. 3 is a block diagram of a processor module of FIG. 1 illustrating another embodiment of a hardware based connection state machine according to the present invention;

FIG. 4 is a flowchart illustrating states of the state machine according to one embodiment of the present invention;

FIG. 5 is a flowchart illustrating steps in processing the timer array according to the state machine illustrated in FIG. 4;

FIG. 6 is a flowchart illustrating steps in reading the timer array according to the process illustrated in FIG. 5;

FIG. 7 is a flowchart illustrating steps in updating an accumulated value of a timer according to the process illustrated in FIG. 5;

FIG. 8 is a flowchart illustrating steps in processing the event buffer according to the state machine illustrated in FIG. 4; and

FIG. 9 is a flowchart illustrating steps in processing the command buffer according to the state machine illustrated in FIG. 4.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION OF THE PREFERRED EMBODIMENTS

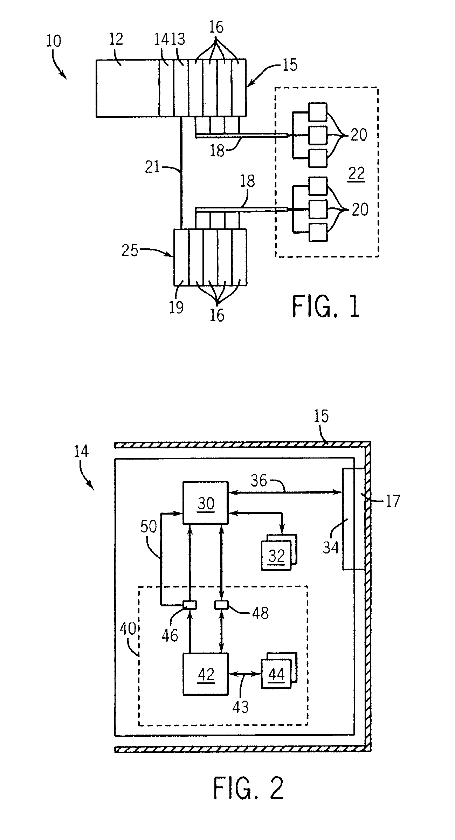

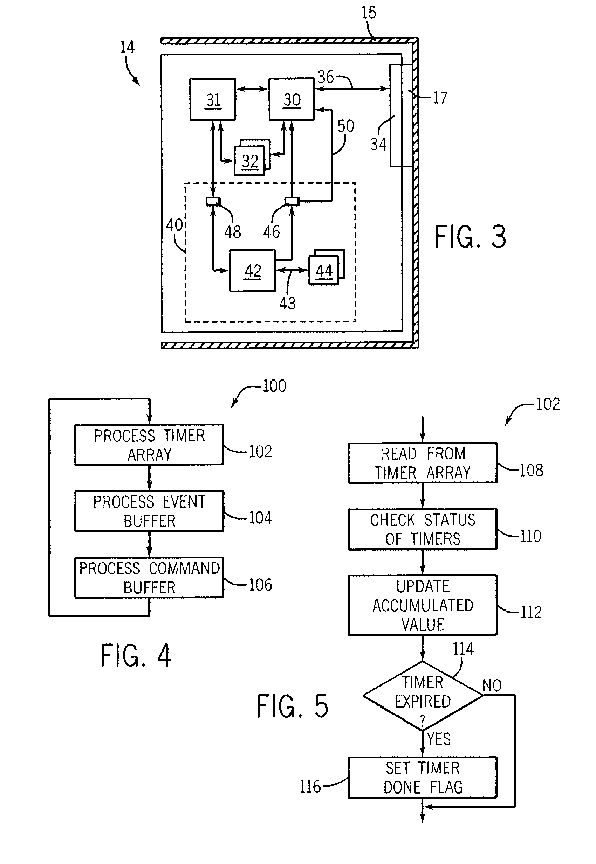

Referring now to Fig. 1, an industrial controller 10 incorporating the present invention typically includes a power supply 12, a processor module 14, and multiple I/O modules 16. The I/O modules 16 connect via I/O signal lines 18 to I/O devices 20 in a controlled process 22. As is understood in the art, each of the modules, 14 and 16, may be inserted into a rack 15 and communicate via a backplane 17 (see Figs. 2 and 3). In addition, remote I/O racks 25 may be included. The base rack 15 may be connected to a remote rack 25 by connection modules, 13 and 19, inserted into each rack, 15 and 25, and joined by a communication cable 21. The connection module, 13 or 19, may be an Ethernet switch, an I/O scanner, or any other suitable device for communicating between the two racks, 15 and 25. The remote I/O rack 25 may similarly include I/O modules 16 connected via I/O signal lines 18 to I/O devices 20 in the controlled process 22.

Referring now to Fig. 2, a single processor embodiment of the present invention is illustrated. The processor module 14 includes a processor 30 configured to execute a program and to communicate with a main memory 32. The processor module 14 includes a connector 34 to connect the module 14 to the backplane 17. The processor 30 may send or receive signals 36 across the backplane, including signals 36 to and from the I/O modules 16.

The processor module 14 also includes a connection monitoring system 40 in communication with the processor 30. The connection monitoring system 40 includes a state machine 42 communicating with a second memory 44. Preferably, a dedicated interface 43, such as a data bus, exists between the state machine 42 and the second memory 44. The state machine 42 also communicates with the processor 30 via an event buffer 46 and a command buffer 48. The connection monitoring system 40 may additionally generate an interrupt signal 50 to the processor indicating data has been written to the event buffer 46. Preferably, the processor 30 and the connection monitoring system 40 are implemented as separate blocks on a single application specific integrated circuit (ASIC). Optionally, any number of ASICs or individual processor, memory, and buffer devices may be used to implement the processor 30 and connection monitoring system 40 as illustrated in Fig 2.

Referring next to Fig. 3, a dual processor embodiment of the present invention is illustrated. The processor module 14 may include a first processor 30 and a second processor 31. Each of the processors, 30 and 31, communicates with a main memory 32. The processor module 14 includes a connector 34 to connect to the module 14 to the backplane 17. As illustrated in Fig. 3, the first processor 30 may send or receive signals 36 across the backplane, including signals 36 to and from the I/O modules 16. Optionally, the processor module 14 may be configured such that either the second processor 31 or both processors, 30 and 31, may communicate with I/O modules 16.

The processor module 14 also includes a connection monitoring system 40. The connection monitoring system 40 includes a state machine, 42 communicating with a second memory 44. Preferably, a dedicated communication path 43 exists between the state machine 42 and the second memory 44, permitting rapid access of the data stored in the second memory 44 by the state machine 42. As illustrated in Fig. 3, the connection monitoring system 40 is in communication with at least one, and preferably both, of the processors, 30 and 31. The state machine 42 may communicate with the first processor 30 via an event buffer 46 and with the second processor 31 via a command buffer 48. An interrupt signal 50 to the first processor 30 is generated by data has been written to the event buffer 46. Optionally, the processor module 14 may be configured such that each of the processors, 30 and 31, may communicate with the state machine 42 via either, or both of, the event buffer 46 and the command buffer 48. Preferably, each of the processors, 30 and 31, and the connection monitoring system 40 are implemented as separate blocks on a single application specific integrated circuit (ASIC). Optionally, any number of ASICs or individual processor, memory, and buffer devices may be used to implement the multiple processors, 30 and 31, and the connection monitoring system 40 as illustrated in Fig 3.

In operation, the connection monitoring system 40 uses the state machine 42 to manage the hardware timer array 128 for monitoring the status of each of the connections between the processor 30 and one of the I/O devices 20. The timer array 128 is stored in the second memory 44 such that the state machine 42 has dedicated access to the timer array 128 via the interface 43. Referring to Fig. 4, the state machine 42 generally executes at step 102 to process the timer array 128, at step 104 to process the event buffer 46, and at step 106 to process the command buffer 48. The steps illustrated in Fig. 4, are exemplary steps of the state machine 42, and it is understood that the steps may be performed in any order and that additional states may be included in the state machine 42 without deviating from the scope of the present invention.

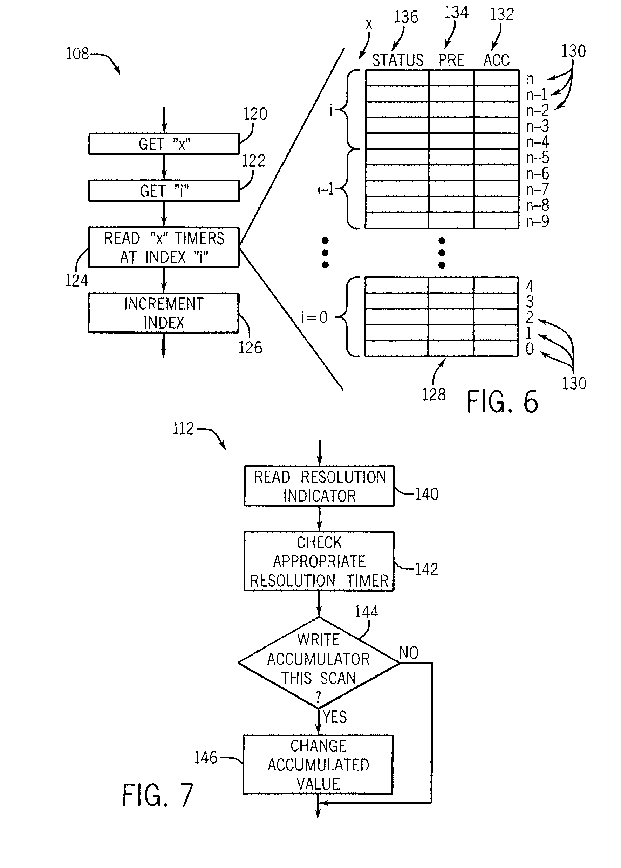

At step 102, the state machine 42 processes each of the connection timers 130 in the timer array 128. Referring to Fig. 6, each timer 130 includes registers for storing at least an accumulated value 132, a preset value 134 and status 136. The accumulated value 132 identifies the current execution time for the timer 130 and is preferably an integral number that is either decremented from the preset value 134 to zero or incremented from zero to the preset value 134. The preset value 134 is determined by the length of time the timer is to run divided by the periodic rate at which the timer is decremented or incremented. The status register 136 includes one or more status flags indicating, for example, that the timer is done, the timer is waiting to be loaded into the event buffer, or the timer has reached a minimum set point.

The hardware timer array 128 includes at least one and preferably a pair of connection timers 130 associated with each connection between the processor 30 and one of the I/O devices 20. Connection timers 130 may be allocated for any connection to the processor 14, including, but not limited to, analog or digital inputs or outputs from I/O devices 20, additional controllers 10, network interface modules, or user interfaces, Each I/O device 20 will respectively provide either an input value to the processor 30 or receive an output value from the processor 30. Because industrial controllers 10 require program execution that is highly-dependable and repeated at well-defined intervals, the processor 14 preferably receives from or transmits to each of the I/O devices 20 an I/O signal 18 at a predefined Requested Packet Interval (RPI). In addition, the controller 10 may be configured to establish a "heartbeat" communication between the processor 30 and each I/O device 20. The heartbeat is a communication transmitted at a longer periodic interval than the interval between data communications and is used to verify that the I/O device 20 is functioning properly. For example, the processor 30 may periodically send an input device a message to verify that it is active and/or that it is capable of changing state. An output device may also be configured to periodically send the processor 30 a message to indicate that it is receiving the output signals 18 and that it is functioning properly.

The combination of data signals and heartbeat signals result in many I/O devices 20 requiring bi-directional communication between the processor 30 and the I/O device 20. By associating a pair of connection timers 130 with each I/O device 20, the state machine 42 can monitor communications both transmitted to and from the processor 30. The preset register 134 of each timer 130 may be set to a different value such that the communications to and from each I/O device 20 may be monitored at a different rates, for example for I/O data or for heartbeat signals.

Although, the industrial controller 10 requires dependable communications between the processor 30 and the I/O devices 20, it is expected and acceptable that some communication errors will occur. If the processor 30 or the I/O device 20 fails to receive a communication within the RPI, either the original communication may be resent or a new communication may be sent. The controller 10 may be configured to identify the maximum length of time permitted between successful communications between the processor 30 and an I/O device 20 that may occur before action is taken. For example, the processor 30 may be configured such that the maximum length of time between successful data signal communications is four times the RPI or twenty times the RPI between successful heartbeat communications.

Referring to Fig. 5, processing the timer array 128 begins at step 108 by reading timer data from the array 128. An exemplary embodiment of reading the timer data from the array 128 is illustrated in Fig. 6. The state machine 42 may be configured to read "x" number of timers 130 each cycle through step 102. For example, one or up to all of the timers 130 may be read each time the state machine executes a read from the timer array 128. Preferably, ten timers 130 are read during each read from the timer array 128. At step 122, the state machine 42 retrieves the current index value, "i," to identify the location within the timer array 128 the next read is to occur. The state machine 42 then reads "x" number of timers 130 at index "i" from the timer array 128, according to step 124. Once the state machine 42 completes reading the timers 130, the index, "i" may be incremented or decremented, according to step 126, such that the index points to an adjacent set of timers 130 in preparation for the next read cycle. This sequence is repeated until all of the timers 130 have been read. The number of cycles required to read all of the timers is dependent on the number "x" of timers 130 read per cycle, the total number "n" of timers 130 in the array 128, and the clock frequency at which the reads are executed. The timer array 128 may be configured to store at least 500, and preferably up to 2000, timers 130. The state machine 42 is configured to execute fast enough such that the entire timer array is read at least once every 10 µs and, preferably, every 2 to 4 µs.

Referring again to Fig. 5, as the timer data is retrieved from the timer array 128, the status for each timer 130 is checked at step 110. Checking the status of each timer 130 includes comparing the accumulated value 132 to determine whether the timer has expired. If the timer 130 has expired, the state machine 42 sets the done flag in the status register 136 and resets the accumulated value 132 so that the timer can begin counting again at the next cycle. If the timer 130 has not expired, then the state machine 42 will update the accumulated value according to step 112.

Referring to Fig. 7, each accumulated value 132 is updated according to the resolution selected for that timer 130. In order to reduce the required memory allocation for each timer 130, a series of resolution timers may be executing such that the accumulated value is only updated on scans when the designated resolution timer is done. For example, resolution timers may be assigned a preset value of ten or one hundred. The resolution timer is continuously executed such that the resolution timer done flag is set every tenth or one hundredth cycle. Each timer 130 can be configured to be updated each scan or, optionally, only when the appropriate resolution timer done flag is set. Consequently, when a timer is updated according to step 112, a resolution indicator for that timer is read, per step 140, to determine how frequently the accumulated value 132 of the timer 130 is updated. In step 142, the appropriate resolution timer done flag is checked. The state machine 42 determines whether the done flag of the proper resolution timer is set in step 144 to determine if the accumulated value 132 needs to be updated. The accumulated value 132 is updated, if required, at step 146. It is contemplated that any suitable set of resolution timers may be implemented. Preferably, the resolution timers exist to permit a range of RPI values for the timers 130 to be set from about 10 µs to at least 10 seconds.

Referring again to Fig. 5, after updating the accumulated value 132, the state machine 42 checks if the done flag for any of the timers 130 read during the cycle are set. If a done flag is set and the event buffer 46 has available memory, the state machine 42 will post the state of the expired timer 130 into the event buffer 46. If none of the timers expired during this cycle, the state machine 42 transitions to process the buffers.

The event buffer 46 is used to communicate events, or changes in state, of a timer 130, such as the expiration of a timer 130, from the state machine 42 to the processor 30. Because the events in the event buffer 46 may be used to force a write from the processor 30 to an I/O device 20, the events in the buffer 46 may also include immediate output commands sent from the processor 30 to the state machine 42 triggering a communication prior to the expiration of a timer 130.

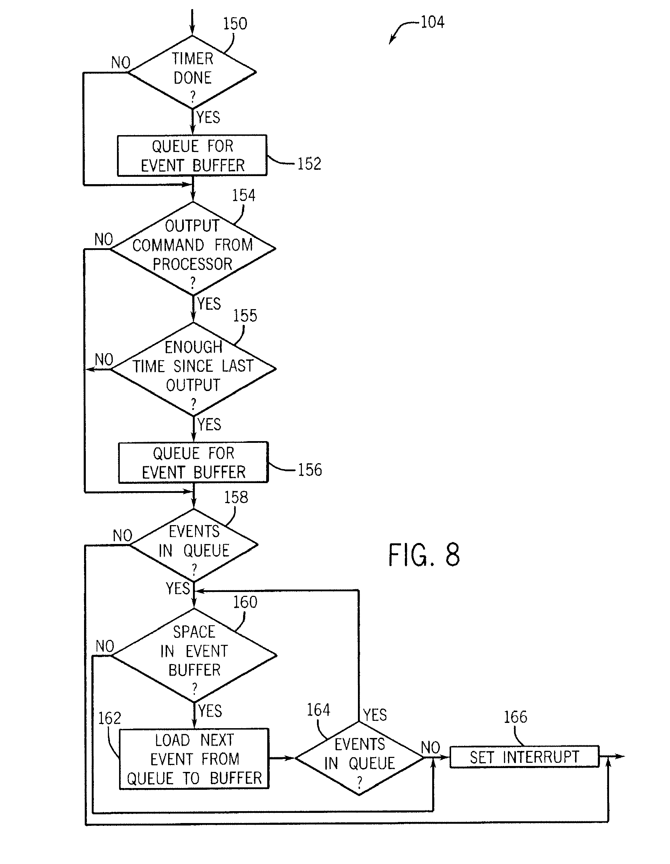

Processing the event buffer 46, as indicated by step 104, includes monitoring timer events in the state machine 42 and output commands from the processor 30 to trigger action by the processor 30. Referring next to Fig. 8, at step 150, the state machine 42 evaluates the status registers 136 of each timer 130 as it is read during the prior scan. If the timer done flag is set for any of the timers 130, the state machine 42 will place the timer information into the queue for the event buffer 46 in step 152. The timer information written into the queue may include, for example, an identifying number, the status register 136, or the accumulator register 132. In step 154, the state machine 42 determines whether the processor 30 has sent a command to the state machine 42 for an immediate output to an I/O device 20. If the processor 30 has commanded an immediate output, the state machine 42 will retrieve the timer information for the output timer 130 associated with that I/O device 20. At step 155, the state machine 42 verifies that sufficient time has passed since the prior output to the specified I/O device 20, and if enough time has passed, the state machine 42 places the state of the timer into the queue for the event buffer 46 at step 156.

The event buffer 46 is preferably a first-in-first-out (FIFO) buffer managed by the state machine 42. The event buffer 46 has a finite depth and transfers a limited number of events to the processor 30 at periodic intervals. At step 158, the state machine 42 checks to see if there are events in the queue to be transmitted to the processor 30. If there are no events in the queue, processing of the event buffer 46 for that interval is complete. If there are events in the queue to be transmitted, the state machine 42 checks if there is space in the event buffer 46 to add another event at step 160. If there is space in the event buffer 46, the state machine 42 passes the next event in the queue into the event buffer 46 at step 162. In step 164, the state machine determines if additional events remain in the queue. If any events remain in the queue, the state machine returns to step 160 to check if there is any space remaining in the event buffer 46. If all events in the queue have been transferred to the event buffer 46, the state machine 42 generates an interrupt signal 50 to notify the processor 30 that there are events in the event buffer 46 that require processing. In one embodiment, the event buffer 46 has a depth of sixteen events to be transmitted during each interval. Optionally, the event buffer 46 may have any suitable depth or the connection monitoring system 40 may include multiple event buffers 46.

The processor 30 services the interrupt signals 50 from the connection monitoring system 40 as well as signals 36 to or from the I/O devices 20. During normal operation, an input module, for example, will periodically transmit an input signal 36 to the processor 30 and the processor 30 will send an output signal 36 to an output module. Upon completion of a normal communication between the processor 30 and an I/O device 20, the processor 30 may send a reset timer command to the state machine 42, resetting the accumulator register of the timer 130 associated with the input or output communication for the respective I/O device 20.

If the interrupt signal 50 from the connection monitoring system 40 is set, the processor reads the events from the event buffer 46 and takes appropriate action. The event may indicate that normal communications have not occurred within the predefined time limit or that the processor 30 is to process a heartbeat communication. If an input module has not communicated with the processor 30 within the predefined time, the processor may declare a fault condition. The processor 30 may be preconfigured to take different levels of action, depending on how critical the faulted input device is to the controlled process. The processor 30 may, for example, permit the controlled process to continue and only post a fault message or the processor 30 may require an immediate shut down of the controlled process. If the processor 30 has not successfully communicated with an output module within the predefined time, the processor 30 may immediately send a message to the output module. The action taken by the processor 30 in response to an output module timeout is also preferably preconfigured according to the specific output device.

The program executing on the processor 30 may also require immediate rather than periodic updates of some of the I/O devices 20. The processor 30 may send a command to the state machine 42 identifying to which I/O device an immediate output is desired. The state machine 42 places the timer information in the event buffer 46 and sets the interrupt signal 50. The processor 30 services the interrupt signal 50 and sends a message to the identified I/O device 20.

Although utilizing the state machine 42 to process immediate output commands integrates this feature with the communication monitoring performed by the state machine 42, the potential exists for a program to command an immediate output to one or more I/O devices 20 at too frequent of a time interval, such that the state machine 42 cannot properly manage the timer array 128. Consequently, when the state machine 42 receives an immediate output request, the state machine 42 compares the value of the accumulator register 132 to the value of the preset register 134 for the timer 130 associated with the target I/O device 20. The state machine 42 prevents the immediate output request from occurring until a minimum time has occurred from the previous output request. Preferably, at least 25% of the time set in the preset register will have passed prior to allowing subsequent output requests to be processed.

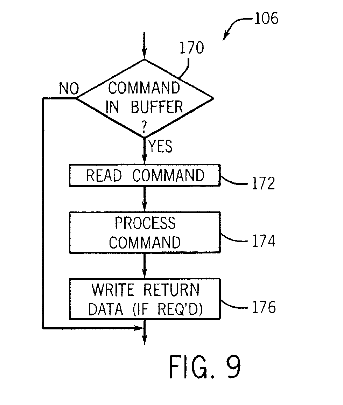

The command buffer 48 allows the processor 30 to interface with the timer array 128. Referring to Figs. 4 and 9, the state machine 42 processes commands from the command buffer 48 at step 106. At step 170, the state machine 42 periodically reads the command buffer 48 to determine if the processor 30 has transmitted a command to the state machine 42. The processor 30 may, for example, enable or disable timers 130 in the timer array 128 according to which I/O devices 20 are connected. Optionally, the processor 30 may also examine the status of a timer 130, write an offset value to a timer 130, or command an immediate output to one of the I/O device 20. At step 172, the state machine 42 reads the command, and at step 174 the state machine takes the appropriate actions in response to the command. If the command requires a response, for example the processor 30 requested the status of a timer 130, the state machine 42 writes the return data into the command buffer 48 at step 176.

Because it is possible that a significant number of timers 130 may have the same RPI, the processor 30 may configure the timers 130 to be offset from each other. For example, a controller 10 may include many of the same type of I/O devices 20. Each of these I/O devices 20 would either be written to or have the heartbeat signal received at the same RPI. Consequently, each of the timers 130 associated with and configured to monitor communications with these I/O devices 20 would initially have the same preset value and would expire at the same time. In order to prevent a potential overload of the queue for the event buffer 46, an offset, or varying offsets, may initially be set in the timers 130 to stagger expiration of the timers 130. In one embodiment, the processor 30 may load different initial values into the accumulator register 132 of each timer 130 having identical default preset values such that the initial expiration of these timers occurs at varying time intervals. Subsequent expirations of the timers 130 will occur at the preset interval from the initial expiration, causing the timers 130 to continue to expire at times offset from each other.

Referring again to Fig. 3, it is contemplated that multiple processors 30 may exist on a processor module 14 and interface with the connection monitoring system 40. As another embodiment, a single processor 30 may have multiple cores utilizing parallel processing techniques to operate in a similar manner as a module 14 having multiple processors 30. It is contemplated that multiple processors 30, or a multi-core processor, permit many configurations of the present invention. Fig. 3, for example, illustrates a first processor 30 interfacing with the command buffer 48. This first processor 30 may be used, for example, to initially configure the timer array 128 or to process commands to be sent to state machine 42 from a program executing on the processor 30. A second processor 31 may interface with the event buffer 46. The second processor 31 may be configured to monitor the event buffer 46 and to service the interrupts generated by the state machine 42 which indicate the presence of an event in the event buffer 46.

In yet another embodiment, the connection monitoring system 40 may include multiple command buffers 48 and multiple event buffers 46 each configured substantially as described above. Each buffer may be configured to interface with a portion of the timer array 128 or to interface with one of multiple processors, 30 or 31, or multiple cores in a single processor. It is also contemplated that multiple state machines 42 may be included to manage portions of a timer array 128 and may similarly interface with one of multiple processors, 30 or 31, or multiple cores in a single processor. Still other embodiments may utilize varying numbers and interconnections of processors, 30 or 31, event buffers 46, command buffers 48, and state machines 42 to realize varying efficiencies of processing and responsiveness to timer events.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention

The following list provides additional information regarding the figures and their reference signs:

**Parts List**

| Ref. Siqn. | Description |
|---|---|
| 10 | Industrial controller |
| 12 | Power supply |
| 13 | Connection module |
| 14 | Processor module |
| 15 | Rack |
| 16 | Input/Output module |
| 17 | Backplane |
| 18 | Input/Output signals |
| 19 | Connection module |
| 20 | Input/Output device |
| 21 | Communication cable |
| 22 | Controlled process |
| 25 | Remote rack |
| 30 | (First) processor |
| 31 | Second processor |
| 32 | Main memory |
| 34 | Connector |
| 36 | Signal |
| 40 | Connection monitoring system |
| 42 | State machine |
| 43 | Dedicated interface |
| 44 | Second memory |
| 46 | Event buffer |
| 48 | Command buffer |
| 50 | Interrupt signal |
| 102 | Step: Process timer array |
| 104 | Step: Process event buffer |
| 106 | Step: Process command buffer |
| 108 | Step: Read from timer array |
| 110 | Step: Check timer status |
| 112 | Step: Update Accumulator |
| 114 | Step: Check if Timer Expired |
| 116 | Step: Set Timer done |
| 120 | Step: Get number of timers to read |
| 122 | Step: Get index into timer array |
| 124 | Step: Read timers |
| 126 | Step: Increment index into timer array |
| 128 | Timer array |
| 130 | Connection timer |
| 132 | Accumulator register |
| 134 | Preset register |
| 136 | Status register |
| 140 | Step: Read resolution indicator |
| 142 | Step: Check resolution timer |
| 144 | Step: Check if accumulator is to be updated |
| 146 | Step: Update accumulator |
| 150 | Step: Check if timer is done |
| 152 | Step: Place timer in queue |
| 154 | Step: Check command buffer |
| 155 | Step: Check minimum time between events |
| 156 | Step: Place command in queue |
| 158 | Step: Check if queue empty |
| 160 | Step: Check if event buffer has space |
| 162 | Step: Load event buffer |
| 164 | Step: Check if queue empty |
| 166 | Step: Set interrupt |
| 170 | Step: Check command buffer |
| 172 | Step: Read command buffer |
| 174 | Step: Process command |
| 176 | Step: Write return data to command buffer |

### The following is a list of further preferred embodiments of the invention:

Embodiment 1: A connection monitoring system for an industrial controller comprising:
   a processor executing a program to periodically communicate with a plurality of Input/Output (I/O) devices connected to the processor;
   a hardware timer array including at least one connection timer associated with each of the plurality of I/O devices;
   a state machine executing separately from the processor to monitor each connection timer and to provide a signal to the processor in response to a change in state of the connection timer.
Embodiment 2: The connection monitoring system of embodiment 1 wherein the timer array further comprises an input connection timer and an output connection timer for each of the I/O devices connected to the processor.
Embodiment 3: The connection monitoring system of embodiment 1 further comprising a dedicated interface between the hardware timer array and the state machine.
Embodiment 4: The connection monitoring system of embodiment 1 wherein each connection timer includes an accumulator register and the state machine controls the accumulator register.
Embodiment 5: The connection monitoring system of embodiment 1 further comprising at least one additional state machine wherein each of the state machines monitors a portion of the timer array.
Embodiment 6: The connection monitoring system of embodiment 1 further comprising:
   a command buffer transmitting messages between the processor and the state machine; and
   an event buffer transmitting each signal between the state machine and the processor upon the change in state of the connection timer.
Embodiment 7: The connection monitoring system of embodiment 6 further comprising at least one additional event buffer wherein the state machine selectively loads each signal into one of the event buffers.
Embodiment 8: The connection monitoring system of embodiment 6 further comprising an interrupt signal to the processor generated by the state machine loading the signal into the event buffer.
Embodiment 9: A connection monitoring system for an industrial controller comprising:
   a first processor;
   a second processor wherein at least one of the first and the second processors executes a program to periodically communicate with at least one of a plurality of Input/Output (I/O) devices;
   a hardware timer array including at least one connection timer associated with each of the plurality of I/O devices;
   a first state machine executing separately from each of the processors to monitor each connection timer to provide a signal to at least one of the processors upon a change in state of the connection timer.
Embodiment 10: The connection monitoring system of embodiment 9 further comprising a dedicated communication channel between the hardware timer array and the first state machine.
Embodiment 11: The connection monitoring system of embodiment 9 further comprising at least one additional state machine wherein each of the state machines monitors a portion of the timer array.
Embodiment 12: The connection monitoring system of embodiment 9 further comprising:
   a command buffer transmitting messages between at least one of the processors and the first state machine; and
   a first event buffer transmitting the signals between the first state machine and the at least one processor upon the change in state of the connection timer.
Embodiment 13: The connection monitoring system of embodiment 12 wherein the first processor interfaces with the command buffer and the second processor interfaces with the event buffer.
Embodiment 14: The connection monitoring system of embodiment 12 further comprising:
   a second event buffer wherein the first state machine selectively loads each signal into one of the event buffers.
Embodiment 15: The connection monitoring system of clam 14 wherein the first processor reads from the first event buffer and the second processor reads from the second event buffer.
Embodiment 16: A method of monitoring communications between a processor and a plurality of Input/Output (I/O) devices in an industrial control system using a state machine and a hardware timer array including at least one connection timer associated with each of the plurality of I/O devices, the steps comprising:
   scanning the hardware timer array using the state machine at a periodic interval wherein the duration of each connection timer is a multiple of the period of one of an input and an output between the processor and one of the I/O devices; and
   providing a signal to the processor from the state machine upon a change in state of one of the connection timers; and
Embodiment 17: The method of embodiment 16 wherein the state machine scans the hardware timer array using a dedicated interface between the hardware timer array and the state machine.
Embodiment 18: The method of embodiment 17 further comprising the steps of:
   reading the signal in the processor from the state machine identifying a change in state of one of the timers; and
   identifying whether the timer is an input timer or an output timer.

## Claims

1. A connection monitoring system for an industrial controller comprising:
a processor executing a program to periodically communicate with a plurality of Input/Output (I/O) devices connected to the processor;
a hardware timer array including at least one connection timer associated with each of the plurality of I/O devices;
a state machine executing separately from the processor to monitor each connection timer and to provide a signal to the processor in response to a change in state of the connection timer.

2. The connection monitoring system of claim 1 further comprising a dedicated interface between the hardware timer array and the state machine.

3. The connection monitoring system of claim 1 wherein each connection timer includes an accumulator register and the state machine controls the accumulator register.

4. The connection monitoring system of claim 1 further comprising:
a command buffer transmitting messages between the processor and the state machine; and
an event buffer transmitting each signal between the state machine and the processor upon the change in state of the connection timer.

5. The connection monitoring system of claim 4 further comprising an interrupt signal to the processor generated by the state machine loading the signal into the event buffer.

6. A connection monitoring system for an industrial controller comprising:
a first processor;
a second processor wherein at least one of the first and the second processors executes a program to periodically communicate with at least one of a plurality of Input/Output (I/O) devices;
a hardware timer array including at least one connection timer associated with each of the plurality of I/O devices;
a first state machine executing separately from each of the processors to monitor each connection timer to provide a signal to at least one of the processors upon a change in state of the connection timer.

7. The connection monitoring system of claim 6 further comprising at least one additional state machine wherein each of the state machines monitors a portion of the timer array.

8. The connection monitoring system of claim 6 further comprising:
a command buffer transmitting messages between at least one of the processors and the first state machine; and
a first event buffer transmitting the signals between the first state machine and the at least one processor upon the change in state of the connection timer.

9. The connection monitoring system of claim 8 further comprising:
a second event buffer wherein the first state machine selectively loads each signal into one of the event buffers.

10. A method of monitoring communications between a processor and a plurality of Input/Output (I/O) devices in an industrial control system using a state machine and a hardware timer array including at least one connection timer associated with each of the plurality of I/O devices, the steps comprising:
scanning the hardware timer array using the state machine at a periodic interval wherein the duration of each connection timer is a multiple of the period of one of an input and an output between the processor and one of the I/O devices; and
providing a signal to the processor from the state machine upon a change in state of one of the connection timers.
